# EUROPÄISCHE PATENTANMELDUNG

(11) **EP 1 923 196 A2**
(43) Veröffentlichungstag der Anmeldung: **21.05.2008**
(21) Anmeldenummer: 07020464.9
(22) Anmeldetag: 19.10.2007
(51) Int. Cl.: B29C 45/27, B29C 45/28, B29C 45/30, B29C 45/76, B29C 45/78

(54) **Verfahren und Vorrichtung zum Einspritzen von plastifizierten Massen wie Gummi- Silikon und ähnliches direkt oder über einen Kaltkanal in ein Formwerkzeug einer Spritzgiessmaschine**

(30) Priorität: 16.11.2006 DE 102006054416
(71) Anmelder: Klöckner Desma Elastomertechnik GmbH, 78567 Fridingen (DE)
(72) Erfinder: Volker Krell, D-78579 Neuhausen (DE); Manfred Dufner, D-72505 Krauchenwies (DE)
(74) Vertreter: Röther, Peter

(57) **Zusammenfassung**

Die Erfindung betrifft ein Verfahren zum Einspritzen von plastifizierten Massen wie Gummi, Silikon und ähnliches direkt oder über einen Kaltkanal in ein Formwerkzeug einer Spritzgießmaschine mittels einer Düse, deren Öffnungsweite veränderbar ist, das dadurch gekennzeichnet ist, dass am Beginn des Einspritzvorganges die Öffnungsweite maximal ist und im Verlauf des Einspritzvorgangs bis zu dessen Ende die Öffnungsweite der Düse anhand eines vorgegebenen Steuerungsprofils verändert wird, wobei entsprechend der jeweiligen Öffnungsweite und hierdurch bedingte sich ändernde Reibungsverluste in der Masse die Temperatur derselben gezielt beeinflusst wird.

## Beschreibung

Die Erfindung betrifft ein Verfahren und eine Vorrichtung zum Einspritzen von plastifizierten Massen wie Gummi, Silikon und ähnliches direkt oder über einen Kaltkanal in ein Formwerkzeug einer Spritzgießmaschine mittels einer Düse, deren Öffnungsweite veränderbar ist.

Beim Fertigen von Gummiteilen in einer Spritzgießmaschine wird das unvulkanisierte Rohgummi über eine Plastifizier- und eine Einspritzeinheit, an der eine derartige Düse vorgesehen ist, direkt oder über einen Kaltkanal in die Formnester eines Spritzgießwerkzeuges eingespritzt.

Innerhalb der Einspritzeinheit weist die plastifizierte Masse eine Temperatur von etwa 80° auf, eine Temperatur also, bei der Vulkanisation noch verhindert wird. Im Formwerkzeug herrscht eine Temperatur von etwa 150°, bei der die Vulkanisation stattfindet.

Damit im Bereich zwischen Einspritzöffnung und Formwerkzeug nicht doch im Laufe der Zeit Vulkanisation stattfindet und es somit zu einem Zusetzen hier kommt, weist die Düse oder der Kaltkanal eine entsprechende Kühlung bzw. Temperierung auf.

Da in diesem Fall eine "kalte" Masse in den Vulkanisationsraum gelangt, ergeben sich Probleme im Hinblick auf Qualität der zu erzeugenden Artikel und auch bezüglich der Länge der Vulkanisationszeit.

Der Erfindung liegt daher die Aufgabe zugrunde, ein Verfahren der eingangs genannten Art so zu führen, dass durch gezielte Erwärmung der in die Werkzeugkavität gelangenden Masse die Vulkanisationszeit im Werkzeug reduziert werden kann.

Die Erfindung löst diese Aufgabe gemäß dem kennzeichnenden Teil des Anspruchs 1 dadurch, dass am Beginn des Einspritzvorganges die Öffnungsweite maximal ist und im Verlauf des Einspritzvorgangs bis zu dessen Ende die Öffnungsweite der Düse anhand eines vorgegebenen Steuerungsprofils verändert wird, wobei entsprechend der jeweiligen Öffnungsweite und hierdurch bedingte sich ändernde Reibungsverluste in der Masse die Temperatur derselben gezielt beeinflusst wird.

Hierdurch ist es möglich, durch Variation der Öffnungsweite direkt auf die Temperatur der Masse Einfluss zu nehmen, während das über die vorhandene Temperierung nur indirekt und zeitlich verzögert möglich wäre.

Am Anfang dieses Einspritzvorgangs wird die Düsenöffnung auf maximale Öffnungsstellung gesetzt, damit der Strömungsvorgang der Masse beginnen kann. Dann wird im Laufe des Einspritzvorgangs beispielsweise die Öffnung auf 30% reduziert, wodurch durch innere Reibung direkt in der Masse eine gezielte Erwärmung stattfindet, und nun eine Temperatur innerhalb der Masse herrscht, die sie im Formwerkzeug beschleunigt ausvulkanisieren lässt. Zum Ende des Einspritzvorgangs wird dann wieder die maximale Öffnungsstellung eingestellt.

Zur Durchführung des Verfahrens wird daher ein Düse benötigt, deren Düsenöffnung stufenlos von einer maximalen Öffnungsstellung bis zur Geschlossenstellung verstellbar ist.

Eine derartige Düse ist beispielsweise aus der DE 103 21 355.4 A1 bekannt.

Hier ist zum Schließen und Öffnen der Düsenöffnung eine Nadel vorgesehen, die den düsenöffnungsseitigen Teil eines Einsatzes bildet, der axial relativ zum Düsenkörper mittels eines Antriebs verschiebbar ist.

Als Antrieb kann ein Elektromotor oder ein druckmittelbetriebener Hubzylinder vorgesehen sein.

Gemäß einer bevorzugten Ausführungsform wird zur Durchführung des Verfahrens eine Düse gemäß Anspruch 8 verwendet, die dadurch gekennzeichnet ist, dass die Antriebseinheit über außerhalb des Düsenkörpers angeordnete Schubstangen mit einem Haltering verbunden ist, der den Düsenkörper in Höhe des Einsatzes umgibt und auf dem Düsenkörper axial verschiebbar gelagert ist, wobei im Haltering mehrere Bolzen radial zur Düsenmittelachse angeordnet sind und mit ihren nach innen weisenden Enden in einen ringförmigen Einstich im Einsatz hineinragen, wobei auf dem Düsenkörper ein doppelseitig druckbeaufschlagbarer ringflanschartiger Kolben angeordnet ist, der von einem den Düsenkörper umgebenden, auf dem Düsenkörper axial verschiebbaren Gehäuse umgeben ist, dessen in Richtung Düsenöffnung weisender, die Stirnseite des Gehäuses verschließender Gehäusedeckel als Abstützung für die am Haltering angreifenden Schubstangen dient.

In einer besonders einfachen Ausführungsform der Düse ist vorgesehen, dass Düsenkörper und Kolben eine Baueinheit bilden.

Der Verschluss der Düse erfolgt über die Kegelfläche des konischen vorderen Endes des Einsatzes mit dem Gewindering. Der Düsenkörper spielt hier praktisch die Rolle einer Kolbenstange, wobei Kolbenstange und Kolben im Betrieb ruhen, während bei Druckbeaufschlagung im Gehäuse sich allein das Gehäuse in axialer Richtung bewegt.

Da die Schubstangen am Gehäuse befestigt sind, überträgt sich die Gehäusebewegung auf den Haltering und somit auf die zum Einsatz führenden Bolzen und somit schlussendlich auf den Einsatz selbst. Der Gehäusedeckel verfügt über ein Außengewinde, so dass er in das Gehäuse eingeschraubt werden kann. Er ist nach außen abgedichtet. Die vier Schubstangen sind über Gewindebohrungen mit dem Deckel fest verbunden und übertragen die Bewegung an den Haltering.

Während bei der oben genannten Düse gemäß Stand der Technik im vorderen Bereich der Düse ebenfalls eine Kühlung vorgesehen war, jedoch im Kaltkanal selber, wird bei der erfindungsgemäßen Düse vorgeschlagen, dass den Düsenkörper ein Ringraum zur Aufnahme und Leitung eines Kühlmediums umgibt.

Der Ringraum wird beispielsweise aus drei Teilen zusammengeschweißt, nämlich aus dem Innenring, der auf den Düsenkörper aufgesteckt wird und einem Außenring, der mit dem Innenring verschweißt wird. Im Innern sorgt ein Steg für die Trennung von Ein- und Auslass und die Zirkulation des Kühlmediums. Durch die zylinderförmige Kühlung bzw. Temperierung ist es der Düse möglich, relativ weit in die feste Aufspannplatte einzutauchen.

Damit die Gehäusebewegung über die Schubstangen und den Haltering auf den Einsatz übertragen werden können, sind die vom Haltering zum Einsatz führenden-Bolzen durch Langlochbohrungen im Düsenkörper geführt, die eine dem Hubweg des Kolbens entsprechende Länge aufweisen.

Wie aus dem Stand der Technik bekannt, endet der materialführende Kanal im Einsatz in Bohrungen, die vor dem Beginn des eigentlichen Nadelbereichs im Düsenmundstück enden. Dieses Düsenmundstück ist durch einen in etwa konischen Gewindering gebildet, der auf das vordere Ende des Düsenkörpers aufgeschraubt ist.

Die Erfindung wird im folgenden anhand einer Zeichnung dargestellt und erläutert.

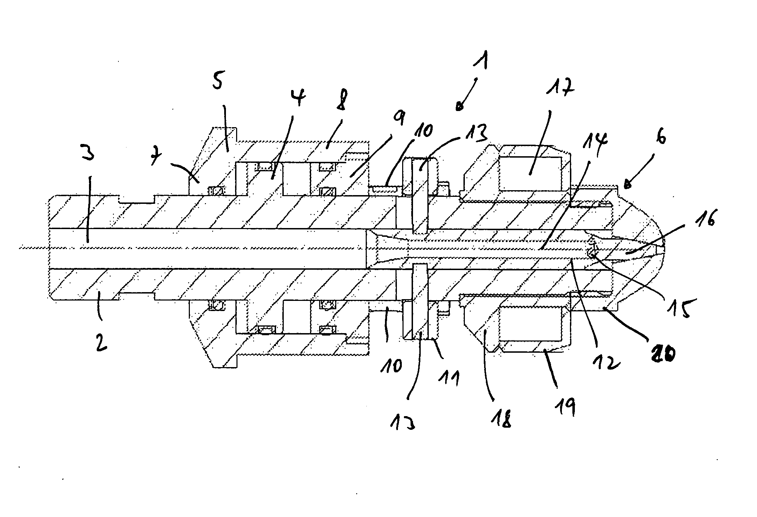

In der einzigen Zeichnung ist eine Nadelverschlussdüse dargestellt und allgemein mit dem Bezugszeichen 1 versehen. Sie besteht aus einem Düsenkörper 2, der in seiner vollen Länge von einem Kanal 3 durchsetzt ist. Auf dem Düsenkörper 2 befindet sich ein ringflanschartiger Kolben 4, der von einem Gehäuse 5 umgeben ist, welches in axialer Richtung auf dem Düsenkörper verschiebbar ist. Das Gehäuse 5 weist eine vom Düsenmundstück 6 abgewandte Rückwand 7 auf, die einstückig mit dem Gehäusemantel 8 verbunden ist. In Richtung Mundstück 6 ist das Gehäuse 5 mit einem Gehäusedeckel 9 verschlossen, der mittels Gewinde in den Mantel 8 eingeschraubt wird. Das Gehäuse 5 bildet somit einen nach außen hin abgedichteten Zylinder, in dem der Kolben 4 angeordnet ist.

In den Gehäusedeckel 9 eingeschraubt sind Schubstangen 10, die an einem Haltering 11 befestigt sind, der den Düsenkörper 2 im Bereich eines im Kanal 3 axial verschiebbaren Einsatzes 12 umgibt. Vom Haltering 11 führen radial zum Einsatz 12 Bolzen 13, die mit ihren nach innen weisenden Enden in einen ringförmigen Einstich im Einsatz 12 hineinragen.

Der Einsatz 12 weist einen axial verlaufenden materialführenden Kanal 14 auf, der in Öffnungen 15 endet, die vor der nadelförmigen Spitze 16 die Verbindung zum Kanal 3 bilden. In der dargestellten geschlossenen Stellung liegt die konische Fläche der Spitze 16 in einer entsprechend geformten Komplementärfläche im Düsenmundstück 6, das aus einem Gewindering 20 gebildet ist, der auf das vordere Ende des Düsenkörpers 2 aufgeschraubt ist.

Zwischen Düsenmundstück 6 und dem Haltering 11 umgibt den Düsenkörper 2 ein Ringraum 17 zur Aufnahme und Leitung eines Kühlmediums. Der Ringraum 17 wird gebildet durch einen auf den Düsenkörper 2 aufgeschobenen Innenring 18 und einen mit diesem verschweißten Außenring 19. Im Innern sorgt ein nicht dargestellter Steg für die Trennung von Ein- und Auslass und die Zirkulation des Kühlmediums.

Im Betrieb wird die Düse 1 durch die nicht dargestellte feste Aufspannplatte einer Spritzgießmaschine an den Angusskanal eines ebenfalls nicht dargestellten Formwerkzeugs angelegt. Durch Beaufschlagung des Kolbens 4 wird das Gehäuse in axialer Richtung auf dem Düsenkörper 2 verschoben, wodurch über die Schubstangen 10, den Haltering 11, die Bolzen 13 auch der Einsatz 12 mitbewegt wird.

Das von einer Plastifiziereinheit kommende Material gelangt durch den Kanal 3 in den materialführenden Kanal 14 des Einsatzes und über die Öffnungen 15 und das Düsenmundstück 6 in das Formwerkzeug.

Dabei kann durch geregeltes Verschieben des Einsatzes die Größe der Austrittsöffnung verändert werden, wodurch bewusst Energie in die ausgespritzte Masse eingebracht wird, da sich die hierbei entstehenden Reibungsverluste in Wärme umwandeln.

Über die Maschinensteuerung kann dann die Größe der Austrittsöffnung über den gesamten Einspritzvorgang variabel gesteuert werden. Die Verstellung kann über eine nicht dargestellte Wegmessung kontrolliert werden.

## Patentansprüche

1. Verfahren zum Einspritzen von plastifizierten Massen wie Gummi, Silikon und ähnliches direkt oder über einen Kaltkanal in ein Formwerkzeug einer Spritzgießmaschine mittels einer Düse, deren Öffnungsweite veränderbar ist,
**dadurch gekennzeichnet,**
**dass** am Beginn des Einspritzvorganges die Öffnungsweite maximal ist und im Verlauf des Einspritzvorgangs bis zu dessen Ende die Öffnungsweite der Düse (1) anhand eines vorgegebenen Steuerungsprofils verändert wird, wobei entsprechend der jeweiligen Öffnungsweite und hierdurch bedingte sich ändernde Reibungsverluste in der Masse die Temperatur derselben gezielt beeinflusst wird.

2. Vorrichtung zur Durchführung des Verfahrens nach Anspruch 1 mit einer Düse, deren Düsenöffnung stufenlos von einer maximalen Öffnungsstellung bis zur Geschlossenstellung verstellbar ist.

3. Vorrichtung nach Anspruch 2,
**dadurch gekennzeichnet,**
**dass** zur Verstellung der Öffnungsweite ein externer Antrieb (4, 5) vorgesehen ist, der über die Maschinensteuerung unter Einschaltung einer Wegmesseinrichtung steuerbar ist.

4. Vorrichtung nach Anspruch 2 oder 3,
**dadurch gekennzeichnet,**
**dass** zum gesteuerten Schließen und Öffnen der Düsenöffnung eine Nadel (16) vorgesehen ist, die den düsenöffnungsseitigen Teil eines Einsatzes (12) bildet, der axial relativ zum Düsenkörper (2) mittels des Antriebs (4, 5) verschiebbar ist.

5. Vorrichtung nach Anspruch 4,
**dadurch gekennzeichnet,**
**dass** der Einsatz einen Materialförderkanal (14) aufweist, der düsenöffnungsseitig über eine oder mehrere Bohrungen (15) mit dem Düsenmundstück (16) verbunden ist.

6. Vorrichtung nach einem der Ansprüche 2 bis 5,
**dadurch gekennzeichnet,**
**dass** es sich bei dem Antrieb um einen elektrischen Motor handelt.

7. Vorrichtung nach einem der Ansprüche 2 bis 5,
**dadurch gekennzeichnet,**
**dass** der externe Antrieb aus einem Hubzylinder (4, 5) besteht.

8. Vorrichtung nach Anspruch 6 oder 7,
**dadurch gekennzeichnet,**
**dass** die Antriebseinheit (4,5) über außerhalb des Düsenkörpers (2) angeordnete Schubstangen (10) mit einem Haltering (11) verbunden ist, der den Düsenkörper (2) in Höhe des Einsatzes (12) umgibt und auf dem Düsenkörper (2) axial verschiebbar gelagert ist, wobei im Haltering (11) mehrere Bolzen (13) radial zur Düsenmittelachse angeordnet sind und mit ihren nach innen weisenden Enden in einen ringförmigen Einstich im Einsatz (12) hinein ragen, wobei auf dem Düsenkörper (2) ein doppelseitig druckbeaufschlagbarer ringflanschartiger Kolben (4) angeordnet ist, der von einem den Düsenkörper (2) umgebenden, auf dem Düsenkörper (2) axial verschiebbaren Gehäuse (5) umgeben ist, dessen in Richtung Düsenöffnung weisender die Stirnseite des Gehäuses (5) verschließender Gehäusedeckel (9) als Abstützung für die am Haltering (11)angreifenden Schubstangen (10) dient.

9. Vorrichtung nach Anspruch 8,
**dadurch gekennzeichnet,**
**dass** Düsenkörper (2) und Kolben (4) eine Baueinheit bilden.

10. Vorrichtung nach einem der Ansprüche 6 bis 9,
**dadurch gekennzeichnet,**
**dass** den Düsenkörper (2) ein Ringraum (17) zur Aufnahme und Leitung eines Kühlmediums umgibt.

11. Vorrichtung nach einem der Ansprüche 6 bis 10,
**dadurch gekennzeichnet,**
**dass** die vom Haltering (11) zum Einsatz (12) führenden Bolzen (13) durch Langlochbohrungen im Düsenkörper (2) geführt sind, die eine dem Hubweg des Kolbens (4) entsprechende Länge aufweisen.

12. Vorrichtung nach einem der Ansprüche 6 bis 11,
**dadurch gekennzeichnet,**
**dass** das Düsenmundstück (6) durch einen konisch ausgebildeten Gewindering (20) gebildet ist, der auf das vordere Ende des Düsenkörpers (2) aufschraubbar ist.
